(19) Europäisches Patentamt
European Patent Office
Office européen des brevets

(11) **EP 0 554 779 B1**

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int Cl.$^6$: **G01M 13/02**, G01M 17/04

(21) Anmeldenummer: **93101228.0**

(22) Anmeldetag: **27.01.1993**

(54) **Verfahren zur Prüfung von Kraftfahrzeugbaugruppen, insbesondere von Einzelradaufhängungen**

Procedure for testing vehicle components, in particular the individual wheel suspensions

Procédé d'essai des composants d'un véhicule, en particulier la suspension des roues

(84) Benannte Vertragsstaaten:
**DE FR GB IT SE**

(30) Priorität: **05.02.1992 DE 4203262**

(43) Veröffentlichungstag der Anmeldung:
**11.08.1993 Patentblatt 1993/32**

(73) Patentinhaber: **FRAUNHOFER-GESELLSCHAFT ZUR FÖRDERUNG DER ANGEWANDTEN FORSCHUNG E.V. 80636 München (DE)**

(72) Erfinder:
• **Müller, Andreas, Dipl.-Ing. W-6100 Darmstadt (DE)**
• **Grubisic, Vatroslav, Prof., Dr. W-6107 Reinheim (DE)**
• **Fischer, Gerhard, Dr. W-6100 Darmstadt (DE)**

(56) Entgegenhaltungen:
**EP-A- 0 350 608     DE-A- 3 818 661**

## Beschreibung

Die Erfindung betrifft ein Verfahren zur Prüfung von Kraftfahrzeugbaugruppen, insbesondere von Einzelradaufhängungen von Kraftfahrzeugen, unter betriebsähnlichen Belastungsbedingungen.

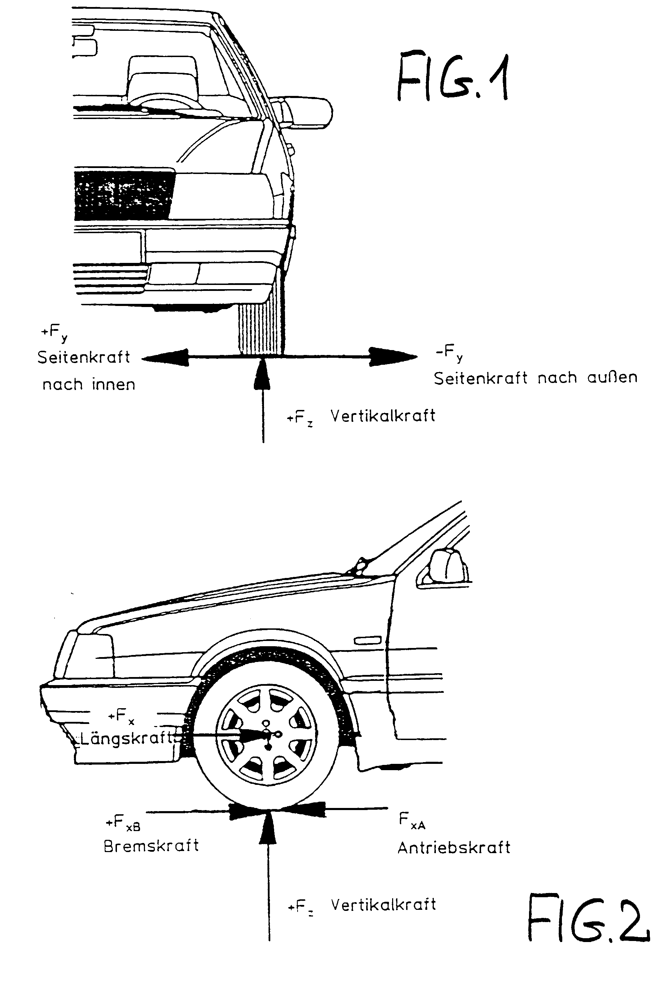

Fahrwerkskomponenten von Kraftfahrzeugen, zu denen z.B. Achsschenkel, Querlenker, Zugstreben, Befestigungselemente, Achsnabe, Karosserie- oder Rahmenteile zählen, sind im Fahrbetrieb komplexen, mehraxialen Beanspruchungen ausgesetzt. Die am Fahrwerk wirkenden Kräfte sind Vertikalkräfte $F_z$, Seitenkräfte $F_y$, Längskräfte $F_x$, sowie Brems- oder Antriebskräfte $F_{xB}$, deren Kraftangriffspunkte aus den Figuren 1 und 2 bei einem Personenkraftwagen ersichtlich sind.

Die aufgeführten Kräfte treten für verschiedene Lastfälle in unterschiedlicher Zuordnung (Korrelation) und Häufigkeit auf. Typische Lastfälle, die im Fahrbetrieb auftreten und bei einer Simulation berücksichtigt werden müssen, sind:

1. Geradeausfahrt auf Straßen unterschiedlicher Oberflächenbeschaffenheit, bei der in erster Linie Vertikalkräfte, aber auch Seitenkräfte und Längskräfte wirken.

2. Kurvenfahrt, wobei vorwiegend Vertikal- und Seitenkräfte wirken.

3. Bremsen und Antrieb, bei denen überwiegend Vertikalkräfte und Brems- bzw. Antriebskräfte wirken.

Bisher kamen zum Prüfen von Einzelkomponenten des Fahrwerks vorwiegend Verfahren mit einaxialer Belastung zum Einsatz, bei denen die sich durch die Anordnung im Verbund ergebenden Zusatzverformungen sowie die aus einer mehraxialen Belastung und unterschiedlichen Kraftangriffspunkten auftretenden komplexen mehrachsigen Beanspruchungen nicht berücksichtigt werden.

Es sind aber auch Verfahren mit mehraxialer Belastung bekannt, beispielsweise aus der auf die Patentinhaberin zurückgehenden EP 0 094 570 B1, die eine Anordnung zur Simulation der Betriebsbeanspruchungen von Fahrzeugen bzw. Fahrzeugbaugruppen beschreibt, mit welcher gleichzeitig Vertikalkräfte, Seitenkräfte, Längskräfte und Brems- oder Antriebskräfte in ein Kraftfahrzeug oder eine Kraftfahrzeugbaugruppe eingeleitet werden können, so daß es mit dieser oder anderen bekannten multiaxialen Versuchseinrichtung möglich ist, komplette Achsstrukturen oder gesamte Fahrzeuge zu untersuchen, wobei die einzelnen Kräfte, wie Vertikalkraft $F_z$, Seitenkraft $F_y$, Längskraft $F_x$ sowie Brems- oder Antriebskraft $F_{xB}$ über servohydraulische Kolben-Zylinder-Einrichtungen in die Kraftfahrzeugbaugruppe eingeleitet werden.

Zur Ansteuerung dieser servohydraulischen Kolben-Zylinder-Einrichtungen sind komplexe Ansteuersignale erforderlich, um die verschiedenen betriebsähnlichen Belastungsbedingungen, wie Geradeausfahrt, Kurvenfahrt, Bremsen, Beschleunigen zu simulieren. Hierbei muß bei einer Simulation auch die Häufigkeit der einzelnen Belastungsbedingungen entsprechend berücksichtigt werden, damit die Prüfung den im praktischen Fahrbetrieb auftretenden Gesamtbelastungsbedingungen entspricht.

Die zum Ansteuern der servohydraulischen Kolben-Zylinder-Einrichtungen erforderlichen Ansteuersignale einer multiaxialen Belastungseinrichtung zur Einleitung von Vertikalkräften, Seitenkräften, Längskräften sowie Brems- oder Antriebskräften erforderlichen komplexen Ansteuersignale müssen, um betriebsähnliche Belastungsbedingungen simulieren zu können, in arbeits- und zeitaufwendiger Weise durch Fahrbetriebsmessungen an einem entsprechenden Kraftfahrzeug gewonnen und mittels iterativer Prozeduren an die jeweilige Versuchseinrichtung angepaßt und zu einem Ansteuerbelastungsprogramm verarbeitet werden.

So ist aus der ATZ Automobiltechnische Zeitschrift 82 (1980) 9, Seiten 469 bis 473 ein adaptives Regelverfahren bekannt, das für die verschiedensten mehraxialen Betriebsfestigkeitsprüfstände für Karosserien, Fahrwerke oder ganze Fahrzeuge verwendbar ist, um gemessene Betriebsbeanspruchungen wirklichkeitsgetreu zu simulieren, wobei mit Hilfe von schnellen Digitalrechnern, welche die Sollwerte für die verwendeten analogen Regelkreise unter Berücksichtigung des Schwingungsverhaltens des Systems errechnen, eine hohe Nachfahrgenauigkeit erzielt werden kann. Auch mittels dieses adaptiven Regelverfahrens müssen die zum Ansteuern der servohydraulischen Kolben-Zylinder-Einheiten des Betriebsfestigkeitsprüfstands erforderlichen Ansteuersignale jeweils aus Fahrbetriebsmessungen an dem zu untersuchenden Fahrzeugtyp gewonnen werden und durch iterative Prozeduren an den jeweiligen Betriebsfestigkeitsprüfstand angepaßt werden, um ein Ansteuerbelastungsprogramm zu erhalten.

Ein solches Ansteuerbelastungsprogramm ist jedoch nur für Kraftfahrzeugbaugruppen desjenigen speziellen Kraftfahrzeugtyps (d.h. mit speziellen Fahrzeugeigenschaften und spezieller Fahrzeuggröße) verwendbar, mittels dessen es durch die vorgenannten Fahrbetriebsmessungen gewonnen wurde, sowie für diejenigen Einsatzzwecke und Achslasten, bei denen diese Fahrbetriebsmessungen durchgeführt worden sind. Für die Prüfung von Kraftfahrzeugbaugruppen eines anderen Kraftfahrzeugtyps und/oder bei anderen Achslasten und/oder für andere Einsatzzwecke müssen zur Gewinnung eines entsprechenden Ansteuerbelastungsprogramms jeweils wiederum entsprechende arbeits- und zeitaufwendige Fahrbetriebsmessungen sowie iterative Prozeduren durchgeführt werden, da eine Übertragung oder Anpassung eines für einen bestimmten Kraftzeugtyp mit bestimmten Achslasten und für bestimmte Einsatzzwecke erarbeiteten Ansteuerbelastungsprogramms auf bzw. an einen anderen Kraftfahrzeugtyp, andere Achslasten und/oder andere Einsatzzwecke wegen unterschiedlicher Konstruktionsmerkmale und/oder wegen unterschiedlichem Schwingungsverhalten der Kraftfahrzeugbaugruppen nach dem Stand der Technik nur mit großen Einschränkungen und Schwierigkeiten sowie mit erheblichem Aufwand, wenn überhaupt, möglich ist.

In der EP 0 220 794 B1 ist anhand eines mehraxialen Betriebsfestigkeitsprüfstands die Funktionsweise der Ansteuersignale beim Betrieb des Prüfstands erläutert, es ist jedoch nicht näher beschrieben, wie diese Ansteuersignale gewonnen werden.

In der DE 40 14 876 A1 sind ein Verfahren und eine Einrichtung zum Ermitteln und/oder Überwachen des Zustands einer technischen Komponente eines Kraftfahrzeugs, insbesondere der Reifen hinsichtlich des Reifenluftdrucks und/ oder der Stoßdämpfer hinsichtlich von Stoßdämpferdefekten, durch Messen von in das Fahrwerk des Kraftfahrzeugs eingeleiteten Schwingungen an Bauteilen der Radaufhängung relativ zu der Karosserie beschrieben. Hier handelt es sich überhaupt nicht um eine Ansteuerung von Krafterzeugern eines Betriebsfestigkeitsprüfstands, sondern um aktuelle Messungen an einem Kraftfahrzeug im normalen Fahrbetrieb, bei denen von Sensoren detektierte Meßwerte in einem Rechner mittels eines Algorithmus' verarbeitet und mit gespeicherten früheren Meßwerten bzw. Rechenergebnissen verglichen werden.

Schließlich ist aus der DE 30 25 478 A1 eine Belastungstestanlage für Fahrzeugachsen bekannt, in der Steuereinrichtungen vorgesehen sind, welche die durch die Belastung erzeugte Bewegungen abtasten und regeln, um eine gewünschte Belastung zu erhalten. Diese Belastungstestanlage ist unmittelbar an dem zu untersuchenden Fahrzeug angeordnet. Über die Erstellung eines Ansteuerbelastungsprogramms ist dieser Druckschrift nichts zu entnehmen, vielmehr geht es lediglich darum, jeweils eine gewünschte Belastung an einem speziellen Fahrzeug durch Regelungsvorgänge zu erzeugen.

Aufgabe der Erfindung ist es, ein Verfahren zur Prüfung von Kraftfahrzeugbaugruppen, insbesondere von Einzelradaufhängungen von Kraftfahrzeugen, unter betriebsähnlichen Belastungsbedingungen zur Verfügung zu stellen, womit es ermöglicht wird, ein einmal gewonnenes Belastungsprogramm in verhältnismäßig einfacher Weise und unter relativ geringem Aufwanc auf Kraftfahrzeugbaugruppen, insbesondere Einzelradaufhängungen, unterschiedlichster Fahrzeugtypen und/oder bei unterschiedlichen Achslasten und/oder zu unterschiedlichen Einsatzzwecken zu übertragen.

Diese Aufgabe wird erfindungsgemäß gelöst durch ein Verfahren zur Prüfung von Kraftfahrzeugbaugruppen, insbesondere von Einzelradaufhängungen von Kraftfahrzeugen, unter betriebsähnlichen Belastungsbedingungen, umfassend:

(a) Belasten der Kraftfahrzeugbaugruppe, insbesondere einer Einzelradaufhängung, mit Vertikalkräften, Seitenkräften, Längskräften und/oder Brems- oder Antriebskräften, und

(b) Steuern der Vertikalkräfte, Seitenkräfte, Längskräfte und/ oder Brems- oder Antriebskräfte gemäß einem vorbestimmten Ansteuerbelastungsprogramm, durch das zu Belastungsblöcken zusammengefaßte unterschiedliche, fahrphysikalisch realistische Belastungsfälle der Kraftfahrzeugbaugruppe, insbesondere der Einzelradaufhängung, zeitlich aufeinanderfolgend wiederholt simuliert werden;

wobei das Ansteuerbelastungsprogramm dadurch aus einem standardisierten Basisbelastungsprogramm gebildet wird, daß das standardisierte Basisbelastungsprogramm durch fahrzeug- und/oder achsspezifische Umrechnungsgrößen und durch versuchseinrichtungsspezifische Umrechnungsgrößen an die jeweils zu prüfende aktuelle Kraftfahrzeugbaugruppe, insbesondere die Einzelradaufhängung, angepaßt wird, wobei zur Anpassung der zu prüfenden aktuellen Kraftfahrzeugbaugruppe, insbesondere der Einzelradaufhängung, an das standardisierte Basisbelastungsprogramm deren Federung, insbesondere die Vertikalfeder der Einzelradaufhängung, modifiziert wird.

Die verschiedenen Kräfte (Vertikal-, Seiten-, Längs- und/oder Brems- bzw. Antriebskraft) sind in dem Basis- und Ansteuerbelastungsprogramm zeitlich so kombiniert, daß mittels letzterem fahrphysikalisch realistische Belastungsfälle am Prüfling wiederholt simuliert werden. Die Belastungsblöcke werden so lange wiederholt, bis der Versuchszweck erfüllt ist, beispielsweise eines der Kraftfahrzeugbauteile des Prüflings zu Bruch gegangen oder der Prüfling einer Belastungsintensität und -dauer ausgesetzt worden ist, die einer vorbestimmten Fahrtleistungsdauer entspricht.

Es wurde gefunden, daß eine relativ nur wenig aufwendige und verhältnismäßig unkomplizierte Übertragung eines Belastungsprogramms auf Kraftfahrzeugbaugruppen der verschiedensten Kraftfahrzeugtypen und/oder bei unterschiedlichen Achslasten und/oder für unterschiedliche Einsatzzwecke möglich ist, indem ein aktuell anzuwendendes Ansteuerbelastungsprogramm dadurch gebildet wird, daß ein Basisbelastungsprogramm durch fahrzeugund/oder achsspezifische Umrechnungsgrößen und durch versuchseinrichtungsspezifische Umrechnungsgrößen an den speziellen Fahrzeugtyp und/oder die jeweiligen Achslasten und/oder den besonderen Einsatzzweck angepaßt wird, wobei sich eine besonders günstige Anpaßbarkeit des Basisbelastungsprogramms erreichen läßt, wenn die Federung der zu prüfenden Kraftfahrzeugbaugruppe, insbesondere die Vertikalfeder einer zu prüfenden Einzelradaufhängung, modifiziert wird.

Eine solche Modifizierung besteht bei einer Federung bzw. Vertikalfeder mit nichtlinearer Federkennlinie vorzugsweise darin, daß diese Federung bzw. Vertikalfeder ganz oder teilweise in ihrer Federkennlinie linearisiert wird, worunter auch eine Begrenzung der Einfederungswege, beispielsweise durch Verkürzung des Originalfederweges oder durch Blockieren der Federelemente bzw. der Vertikalfeder (z.B des Federbeins in einer Einzelradaufhängung) zu verstehen ist oder eine Linearisierung durch Austausch der Originalfeder(n) gegen eine oder mehrere andere Federn.

Die vorstehenden sowie weitere Merkmale und Vorteile der Erfindung seien nachfolgend anhand einiger bevorzugter Ausführungsformen des Verfahrens nach der Erfindung unter Bezugnahme auf die Figuren der Zeichnung näher beschrieben und erläutert; es zeigen:

Figur 1     eine Darstellung des Angriffspunkts und der Richtungen der Seitenkraft und der Vertikalkraft bei einem Vorderrad eines Personenkraftwagens;

Figur 2     eine Darstellung der Angriffspunkte und der Richtungen der Längskraft, der Vertikalkraft sowie der Brems- und Antriebskraft an dem Vorderrad der Figur 1;

Figur 3     einen Ausschnitt aus einer beispielsweisen synthetischen betriebsähnlichen Belastungsfolge (synthetisches Lastprogramm), die an einer Einzelradaufhängung eines Kraftfahrzeugs bei einem erfindungsgemäßen Verfahren angewandt werden kann;

Figur 4     eine Vorderansicht einer Ausführungsform einer Versuchseinrichtung zur Prüfung von Einzelradaufhängungen von Kraftfahrzeugen unter betriebsähnlichen Belastungsbedingungen gemäß dem Verfahren nach der Erfindung; und

Figur 5     eine Seitenansicht der in Figur 4 gezeigten Versuchseinrichtung.

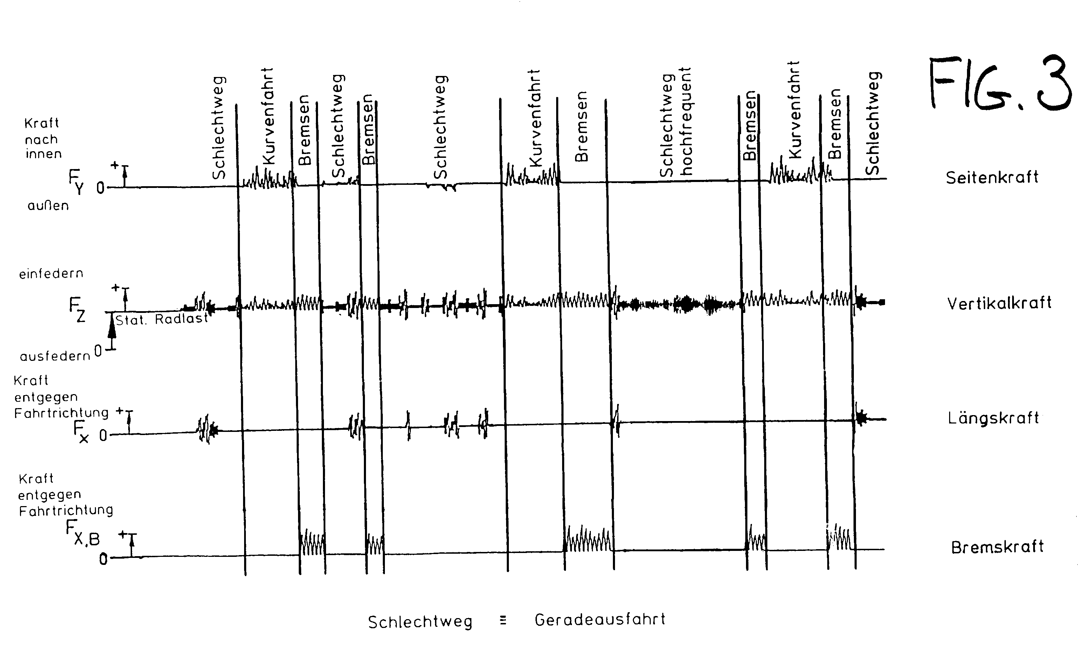

Eine synthetische betriebsähnliche Belastungsfolge besteht, wie am Beispiel der Figur 3 gezeigt ist, aus mehreren unterschiedlichen Belastungsabschnitten von jeweils vorbestimmter zeitlicher Länge, die in diesem Beispiel mit "Schlechtweg", "Kurvenfahrt", "Bremsen" und "Schlechtweg, hochfrequent" bezeichnet sind und auch andere Belastungsabschnitte, wie beispielsweise "Beschleunigen", umfassen oder aus anderen Belastungsabschnitten bestehen können.

Unterschiedliche Belastungsfolgen sind ihrerseits zu Belastungsblöcken zusammengefaßt, die wiederholt erzeugt werden.

Jeder Belastungsabschnitt ist, unabhängig von seiner speziellen Art (Belastungsfall), allgemein durch die Anwendung einer oder mehrerer bestimmter Kräftekombinationen aus Vertikalkraft $F_z$, Längskraft $F_x$, Antriebs- oder Bremskraft $F_{xB}$ und Seitenkraft $F_y$, die so gebildet sind, daß sie jeweils fahrphysikalisch realistischen Belastungsfällen entsprechen, während eines vorbestimmten Zeitabschnitts t auf den Prüfling, gekennzeichnet. Hierbei können einzelne Kräfte natürlich, wie die Figur 3 zeigt, jeweils auch Null sein. In der nachfolgenden Beschreibung der Ausführungsbeispiele ist als Prüfling eine Einzelradaufhängung eines Kraftfahrzeugs angenommen worden, die Erfindung ist aber nicht auf die Prüfung von Einzelradaufhängungen beschränkt, so daß die Ausführungsbeispiele auch für die Prüfung anderer geeigneter Kraftfahrzeugbaugruppen entsprechend gelten.

Geht man bei dem nachstehend beschriebenen vereinfachten Ausführungsbeispiel davon aus, daß als Belastungsfälle "Geradeausfahrt", "Kurvenfahrt", "Bremsen" und "Beschleunigen" vorgesehen sind, aus denen eine betriebsähnliche Belastungsfolge der Art, wie sie in Figur 3 dargestellt ist, zusammengesetzt wird, dann lassen sich die anzuwendenden Kräftekombinationen in der Form der nachstehenden matrixartigen Tabelle 1 darstellen:

Tabelle 1

| | Belastungsfälle : | | | |
|---|---|---|---|---|
| | Geradeausfahrt | Kurven fahrt | Bremsen | Beschleunigen |
| $F_z$ (Vertikalkraft) | $F_{z1}(t_j)$ | $F_{z2}(t_j)$ | $F_{z3}(t_j)$ | $F_{z4}(t_j)$ |
| $F_x$ (Längskraft) | $F_{x1}(t_j)$ | $F_{x2}(t_j)$ | $F_{x3}(t_j)$ | $F_{x4}(t_j)$ |
| $F_{xB}$ (Brems- oder Antriebskraft) | $F_{xB1}(t_j)$ | $F_{xB2}(t_j)$ | $F_{xB3}(t_j)$ | $F_{xB4}(t_j)$ |
| $F_y$ (Seitenkraft) | $F_{y1}(t_j)$ | $F_{y2}(t_j)$ | $F_{y3}(t_j)$ | $F_{y4}(t_j)$ |

Der Belastungsfall "Geradeausfahrt" wird demgemäß (in diesem relativ einfachen Beispiel) dadurch simuliert, daß

während des Zeitabschnitts $t_j$ die Kräftekombination $F_{z1}$, $F_{x1}$, $F_{xB1}$, $F_{y1}$ auf den Prüfling angewandt wird, wobei nicht notwendigerweise alle Kräfte von Null verschieden sein müssen.

Allgemein gesagt, wird im Belastungsfall i (wobei vorliegend für Geradeausfahrt i = 1, für Kurvenfahrt i = 2, für Bremsen i = 3 und für Beschleunigen i = 4 gilt) für den Zeitabschnitt j und die Lastrichtung R (z = Vertikalkraft, x = Längskraft, xB = Brems- oder Antriebskraft, y = Seitenkraft) jeweils die Kraft $F_{Ri}(t_j)$ auf den Prüfling angewandt. Beispielsweise wird im Belastungsfall "Geradeausfahrt" die die Vertikalkraft erzeugende servohydraulische Kolben-Zylinder-Einrichtung der Versuchseinrichtung so angesteuert, daß diese während des Zeitabschnitts j die Kraft $F_{z1}(t_j)$ auf den Prüfling anwendet (siehe Tabelle 1, linke Spalte, oben), wobei ein Belastungsunterabschnitt eines bestimmten Belastungsfalls (z.B. Geradeausfahrt) aus mehreren einzelnen Zeitabschnitten mit unterschiedlichen Kräften bestehen kann, wie die Kurven innerhalb der einzelnen Belastungsabschnitte in Fig. 3 veranschaulichen.

Diese jeweilige Kraft $F_{Ri}(t_j)$ gemäß dem Ansteuerbelastungsprogramm ist gleich einer Basiskraft $B_{Ri}(t_j)$ gemäß der Tabelle 2, unten, welche durch Multiplikation mit einem fahrzeug- und/oder achsspezifischen Umrechnungsfaktor $a_{Ri}$ und einem versuchsstandsspezifischen Umrechnungsfaktor $P_R$ gemäß der Tabelle 3, unten, modifiziert ist (letzterer wird hier auch als "versuchseinrichtungsspezifischer Umrechnungsfaktor" bezeichnet).

Tabelle 2

| | Belastungsfälle : | | | |
|---|---|---|---|---|
| | Geradeausfahrt | Kurven fahrt | Bremsen | Beschleunigen |
| $F_z$ (Vertikalkraft) | $B_{z1}(t_j)$ | $B_{z2}(t_j)$ | $B_{z3}(t_j)$ | $B_{z4}(t_j)$ |
| $F_x$ (Längskraft) | $B_{x1}(t_j)$ | $B_{x2}(t_j)$ | $B_{x3}(t_j)$ | $B_{x4}(t_j)$ |
| $F_{xB}$ (Brems- oder Antriebskraft) | $B_{xB1}(t_j)$ | $B_{xB2}(t_j)$ | $B_{xB3}(t_j)$ | $B_{xB4}(t_j)$ |
| $F_y$ (Seitenkraft) | $B_{y1}(t_j)$ | $B_{y2}(t_j)$ | $B_{y3}(t_j)$ | $B_{y4}(t_j)$ |

Tabelle 3

| Kraftart | Fahrzeug- und/oder achsspezifische Umrechnungsfaktoren: | | | | Versuchsstandsspezifischer Umrechnungsfaktor |
|---|---|---|---|---|---|
| | Geradeausfahrt | Kurven fahrt | Bremsen | Beschleunigen | |
| $F_z$ (Vertikalkraft) | $a_{z1}$ | $a_{z2}$ | $a_{z3}$ | $a_{z4}$ | $P_z$ |
| $F_x$ (Längskraft) | $a_{x1}$ | $a_{x2}$ | $a_{x3}$ | $a_{x4}$ | $P_x$ |
| $F_{xB}$ (Brems- oder Antriebskraft) | $a_{xB1}$ | $a_{xB2}$ | $a_{xB3}$ | $a_{xB4}$ | $P_{xB}$ |
| $F_y$ (Seitenkraft) | $a_{y1}$ | $a_{y2}$ | $a_{y3}$ | $a_{y4}$ | $P_y$ |

Allgemein ergibt sich die jeweilige aktuell anzuwendende Kraft $F_{Ri}(t_j)$ gemäß Tabelle 1 aus der Basiskraft $B_{Ri}(t_j)$ gemäß Tabelle 2 und den Umrechnungsfaktoren $a_{Ri}$ und $P_R$ gemäß Tabelle 3 zu:

$$F_{Ri}(t_j) = B_{Ri}(t_j) \cdot a_{Ri} \cdot P_R$$

Als Beispiel sei angegeben, daß sich die anzuwendende Vertikalkraft $F_{z1},(t_j)$ zu $F_{z1}(t_j) = B_{z1}(t_j) \cdot a_{z1} \cdot P_z$ ergibt. Nur durch die Verfügbarkeit

(a) des Basisbelastungsprogramms, welches die verschiedenen Kräfte, nämlich Vertikalkraft $F_z$, Längskraft $F_x$, Bremsoder Antriebskraft $F_{xB}$ und Seitenkraft $F_y$ (die nicht alle von Null verschieden sein müssen) zeitlich so kombiniert, daß dadurch fahrphysikalisch realistische Belastungsfälle am Prüfling simuliert werden, und

(b) der fahrzeug- und/oder achsspezifischen sowie der versuchsstands- bzw. -einrichtungsspezifischen Umrechnungsgrößen $a_{Ri}$ und $P_R$, die gemäß den obigen Gleichungen insbesondere Anpassungsfaktoren sein können,

ist durch das daraus gebildete aktuelle Ansteuerbelastungsprogramm eine realistische Kraftfahrzeugbauteil- und/oder -baugruppenbeanspruchung und/oder -verformung, welche eine zuverlässige Lebensdauerbeurteilung des Kraftfahrzeugbauteils- und/ oder der Kraftfahrzeugbaugruppe ermöglicht, gewährleistet.

Hinsichtlich des Erstellens des standardisierten Basisbelastungsprogramms und des Übergangs hiervon auf das aktuelle Ansteuerbelastungsprogramm seien noch folgende zusätzliche Erläuterungen gegeben:

(1) Zustandekommen des standardisierten Basisbelastungsprogramms

Grundlage für die Erstellung des Basisbelastungsprogramms ist das Spektrum der Belastungen, welchem die Achskomponenten eines Kraftfahrzeugs im Laufe ihrer Bemessungslebensdauer ausgesetzt sind, und zwar unterschieden

(a) nach den im Fahrbetrieb eines Kraftfahrzeugs maßgebenden physikalischen Lastfällen;

(b) innerhalb dieser einzelnen Lastfälle:
Belastungsstufen nach ihrer Höhe (in dimensionsloser Darstellung, normiert auf einen fahrzeugunabhängigen Höchstwert) und ihrer Auftretenshäufigkeit, zwei Größen (Höhe und Auftretenshäufigkeit), welche als Ergebnis die Häufigkeitsverteilung liefern.

Erfahrungsgemäß liefern die für die Bemessungslebensdauer zugrundegelegten Häufigkeitsverteilungen (Bemessungskollektiv) eine Form, für die als Eckwerte wenig hohe und eine große Anzahl niedriger Beanspruchungsstufen resultieren.

Das Basisbelastungsprogramm für die Durchführung von Versuchen wird nun so modifiziert, daß die Anzahl der höheren Belastungsstufen erhöht und die Anzahl der niedrigen Belastungsstufen verringert wird. Ziel dabei ist es, die Versuchszeit zu verkürzen, gleichzeitig jedoch die gleiche Schädigung wie für das Bemessungskollektiv beizubehalten.

(2) Zustandekommen der fahrzeugspezifischen Faktoren für den Übergang vom Basisbelastungsprogramm auf das Ansteuerbelastungsprogramm

Die fahrzeugspezifischen Faktoren ergeben sich aus geometrischen, mechanischen und physikalischen Randbedingungen des jeweiligen Fahrzeugs. Es wird unterschieden nach den verschiedenen Lastrichtungen und Lastfällen. Maßgebende Größen zur Bestimmung sind:

(a) VERTIKALKRAFT:
Lastfall Geradeausfahrt:

- Gewicht des Fahrzeugs (statische Radlast)
- Steifigkeit des Reifens (Reifenfederkennlinie)
- empirische Faktoren zur Beschreibung der Qualität der Fahrbahnoberfläche

Lastfall Kurvenfahrt:

- Gewicht des Fahrzeugs (statische Radlast)
- Federraten der Aufbaufederung (Feder zwischen Achse und Aufbau) und der Stabilisatoren
- verschiedene geometrische Daten, wie Radstand, Spurweite, Höhe des Aufbauschwerpunkts, achskonstruktionsspezifische geometrische Daten

Lastfall Beschleunigen:

- Gewicht des Fahrzeugs (statische Radlast)
- Radstand, Schwerpunkt des Gesamtfahrzeugs
- Antriebsleistung, Getriebeübersetzung

Lastfall Bremsen:

- Gewicht des Fahrzeugs (statische Radlast)
- Radstand, Schwerpunkt des Gesamtfahrzeugs

(b) SEITENKRAFT:
Lastfall Geradeausfahrt:

- Gewicht des Fahrzeugs (statische Radlast)
- empirischer Faktor in Abhängigkeit von der statischen Radlast

Lastfall Kurvenfahrt:

- siehe Angaben bei Vertikalkraft, zusätzlich:
- Fahrbahnbeschaffenheit (Kraftschlußbeiwert)

(c) LÄNGSKRAFT:
Lastfall Geradeausfahrt:

- Gewicht des Fahrzeugs (statische Radlast)
- empirischer Faktor in Abhängigkeit von der statischen Radlast

Lastfall Beschleunigen:

- siehe Angaben bei Vertikalkraft, zusätzlich:
- Fahrbahnbeschaffenheit (Kraftschlußbeiwert)

(d) BREMSKRAFT:
nur Lastfall Bremsen:

- siehe Angaben bei Vertikalkraft, zusätzlich:
- Fahrbahnbeschaffenheit (Kraftschlußbeiwert)

Wie am Beispiel der Figur 3 angedeutet ist, werden die in das Ansteuerbelastungsprogramm aufgenommenen unterschiedlichen, fahrphysikalisch realistischen Belastungsfälle zu einem Belastungsblockzusammengefaßt, der die verschiedenen Belastungsfälle in unterschiedlichen Aufeinanderfolgen und verschiedenen zeitlichen Längen umfaßt und dann so lange wiederholt wird, wie es in dem jeweiligen Versuch vorgesehen ist. Ein solcher Belastungsblock besteht in dem Beispiel der Figur 3 aus den Belastungsfällen "Geradeausfahrt, Kurvenfahrt, Bremsen" und ist in Figur 3 nur in einem Ausschnitt dargestellt. Die ständige Wiederholung des Belastungsblocks kann beispielsweise so lange durchgeführt werden, bis ein Kraftfahrzeugbauteil der als Prüfling untersuchten Kraftfahrzeugbaugruppe versagt oder bis eine vorbestimmte Fahrtleistung bzw. -strecke simuliert ist.

Ähnlich der Analogie einer realen Versuchsstrecke (größerer Anteil hoher Belastungen) zum realen Fahrbetrieb wird durch die Verwendung des beschriebenen Belastungsprogramms eine deutliche Komprimierung der Versuchszeit erzielt.

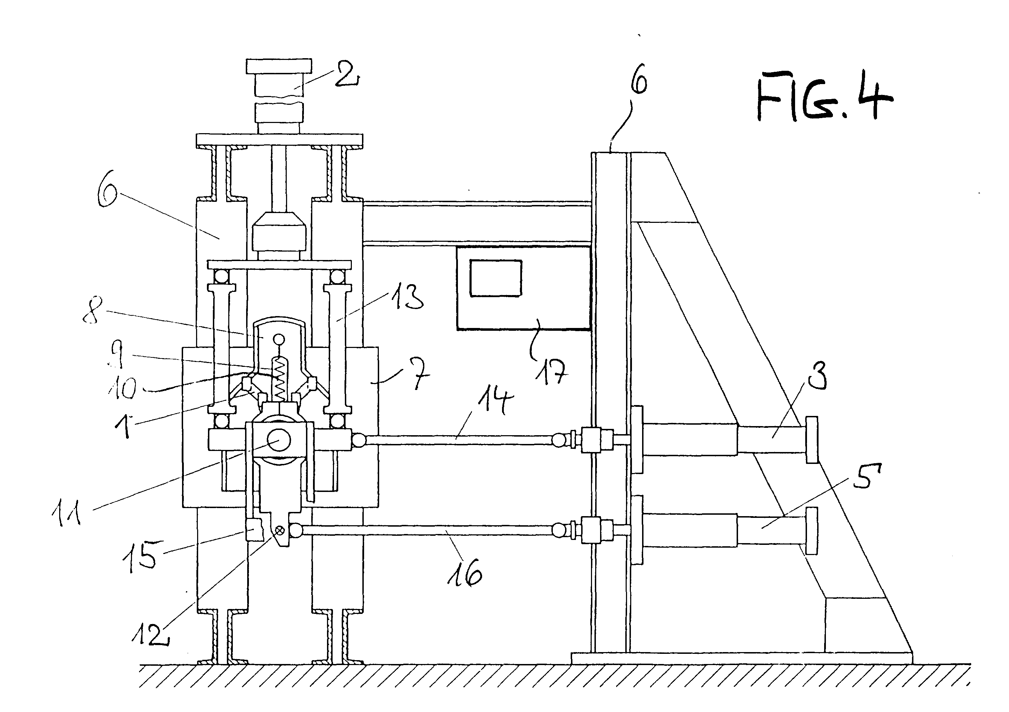

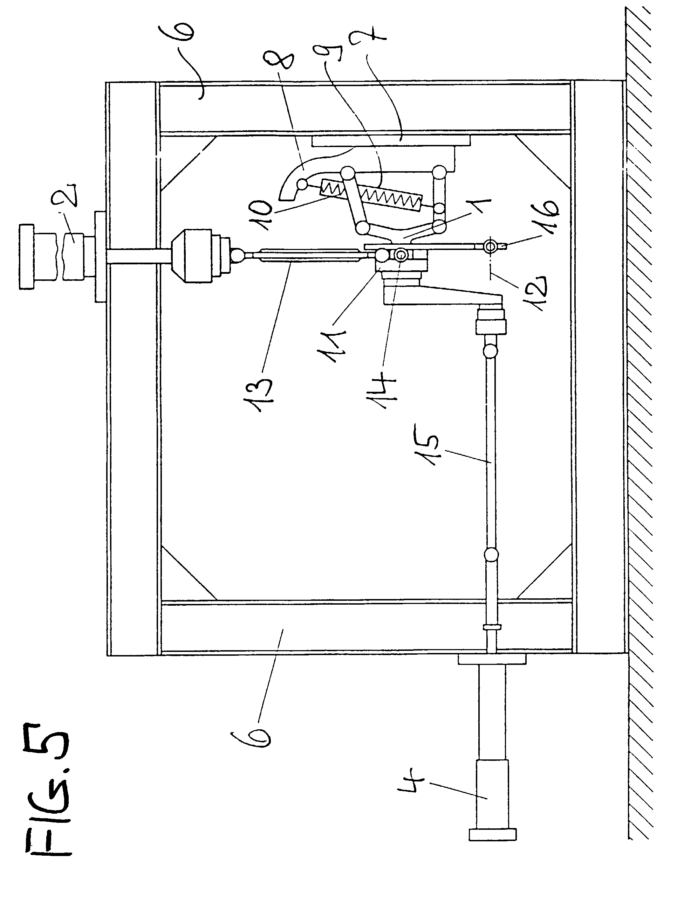

Es sei nun auf die Figuren 4 und 5 Bezug genommen, welche eine Versuchseinrichtung zur Prüfung von Kraftfahrzeugbaugruppen, insbesondere Einzelradaufhängungen, unter betriebsähnlichen Belastungsbedingungen für die Durchführung des erfindungsgemäßen Verfahrens zeigen. Diese Versuchseinrichtung umfaßt folgende Hauptkomponenten:

(a) Eine Belastungseinrichtung zur Einleitung von Vertikalkräften, Seitenkräften, Längskräften sowie Brems- oder Antriebskräften in eine Kraftfahrzeugbaugruppe, vorliegend in eine Einzelradaufhängung 1, wobei die Belastungseinrichtung im einzelnen eine Vertikalkrafterzeugungseinrichtung 2, eine Längskrafterzeugungseinrichtung 3, eine Seitenkrafterzeugungseinrichtung 4 und eine Brems- und Antriebskrafterzeugungseinrichtung 5 umfaßt, die vorzugsweise als servohydraulische Kolben-Zylinder-Einrichtungen ausgebildet und in bzw. an einem Rahmen, Gestell o.dgl. 6 der Versuchseinrichtung angebracht sind.

(b) Eine Montageeinrichtung 7 zum Befestigen des Fahrschemels 8 der Einzelradaufhängung 1 an dem Rahmen, Gestell o.dgl. 6.

(c) Mittel 9 zum Modifizieren der Vertikalfeder 10 der Einzelradaufhängung, wobei es sich vorliegend um Mittel zur Blockierung dieser Vertikalfeder 10 handelt, um die Federkennlinie zu "linearisieren". Allgemein sind mit 9 Mittel zur Modifizierung der Federung einer zu prüfenden Kraftfahrzeugbaugruppe bezeichnet, die anstelle der Einzelradaufhängung mittels der Montageeinrichtung 7 an dem Rahmen, Gestell o.dgl. 6 montiert sein kann, wobei diese Mittel 9 vorzugsweise solche zur Linearisierung der Federkennlinie einer derartigen Federung sind.

(d) Einen Radersatz 11, der an der Einzelradaufhängung 1 angebracht ist und zur Krafteinleitung in dieselbe dient.

Dieser Radersatz weist die gleichen geometrischen Verhältnisse wie eine Original-Rad-Reifen-Komponente auf, welche für die Einleitung der Vertikalkräfte, Längskräfte, Seitenkräfte sowie Brems- und Antriebskräfte wichtig sind, z.B. hat der Radersatz den gleichen Abstand zwischen Radaufstandsebene bzw. -punkt 12 und Radachsmitte.

(e) Eine Vertikalkrafteinleitungsvorrichtung 13, eine Längskrafteinleitungsvorrichtung 14, eine Seitenkrafteinleitungsvorrichtung 15 und eine Brems- und Antriebskrafteinleitungsvorrichtung 16, welche die jeweils zugeordnete Vertikalkrafterzeugungseinrichtung 2, Längskrafterzeugungseinrichtung 3, Seitenkrafterzeugungseinrichtung 4 und Brems- und Antriebskrafterzeugungseinrichtung 5 mit dem Radersatz 11 derart verbinden, daß die Vertikalkräfte, Längskräfte, Seitenkräfte sowie Brems- und Antriebskräfte korrekt über den Radersatz 11 in die Einzelradaufhängung eingeleitet werden. Die Krafteinleitung erfolgt bevorzugt über Stangen, Stempel o.dgl., sowie winkelbewegliche Biegefedern und/oder Kugelelemente bzw. -gelenke in den Radersatz 11.

(f) Eine Steuereinrichtung 17 (die nur in Figur 4 eingezeichnet ist) zum Steuern der Belastungseinrichtung, d.h. der Vertikalkrafterzeugungseinrichtung 2, der Längskrafterzeugungseinrichtung 3, der Seitenkrafterzeugungseinrichtung 4 und der Brems- und Antriebskrafterzeugungseinrichtung 5 derart, daß die Vertikalkräfte, Längskräfte, Seitenkräfte sowie Brems- oder Antriebskräfte gemäß einem vorbestimmten Ansteuerbelastungsprogramm in die Kraftfahrzeugbaugruppe, vorliegend die Einzelradaufhängung 1, eingeleitet werden, durch welches Ansteuerbelastungsprogramm unterschiedliche Belastungsfälle zeitlich aufeinanderfolgend simuliert werden. Dieses Ansteuerbelastungsprogramm umfaßt eine zeitliche Aufeinanderfolge der oben erörterten Kräfte $F_{Ri}(t_j)$, wobei die Belastungsfälle nicht auf die oben erläuterten speziellen Belastungsfälle beschränkt sind, sondern auch noch andere Belastungsfälle umfassen können, wie sie in der Praxis vorkommen. Hierdurch werden diese Belastungsfälle in einer praxisnahen Abfolge als Belastungsabschnitte in der grundsätzlichen Art und Weise simuliert, wie anhand der Figur 3 dargestellt ist. Dabei entspricht die Korrelation und Häufigkeit der einzelnen Belastungsabschnitte der vorgegebenen Nutzung und dem Einsatz des Fahrzeugs, dessen Kraftfahrzeugbaugruppe, beispielsweise Einzelradaufhängung, geprüft wird. Wichtige Randbedingungen zur Verkürzung der Versuchszeiten unter Laborsimulation werden dabei berücksichtigt. Ferner kann mit Hilfe des synthetischen Belastungsprogramms durch die Anregung eines breiten Frequenzbandes das maßgebende Schwingungsverhalten der Kraftfahrzeugbaugruppe, insbesondere der Einzelradaufhängung, reproduziert werden.

Das Belastungsprogramm entspricht einer definierten synthetischen Versuchsstrecke mit fahrphysikalisch realistischen Belastungsfällen, bei denen die verschiedenen Kräfte (Vertikalkraft, Seitenkraft, Brems- oder Antriebskraft und Längskraft, die nicht alle von Null verschieden sein müssen) so zeitlich kombiniert erzeugt werden, daß dadurch die gewünschten fahrphysikalisch realistischen Belastungsfälle am Prüfling simuliert werden. Dieses Belastungsprogramm (Ansteuerbelastungsprogramm) wird bis zu einer vorgegebenen Versuchsdauer ständig wiederholt. Die Schädigung der Kraftfahrzeugbaugruppe, insbesondere der Einzelradaufhängung, während der gesamten Versuchsdauer entspricht einer gleichen Schädigung, die während der Nutzungszeit des damit ausgerüsteten Kraftfahrzeugs auftreten würde.

Die Erfindung ermöglicht es, von einem standardisierten Belastungsprogramm ausgehend, dieses Belastungsprogramm an unterschiedliche (i) Fahrzeuggrößen und Fahrzeugeigenschaften, (ii) Einsatzzwecke und (iii) Achslasten anzupassen.

Ausgehend von dem Basisprogramm, welches die zeitliche Abfolge, die Häufigkeiten und Einsatzbedingungen beinhaltet, werden die einzelnen Belastungsabschnitte an die jeweils erforderlichen neuen Bedingungen angepaßt. Die Anpassung der Belastungsintensität erfolgt aufgrund der in der Literatur beschriebenen physikalischen Zusammenhänge und wird durch fortwährend durchgeführte Untersuchungen ergänzt. Der Ablauf des Belastungsprogramms und die Korrelation der Kräfte bleibt dabei konstant.

Aus der Relation der für die einzelnen Belastungsabschnitte neu ermittelten und im Basisbelastungsprogramm enthaltenen Belastungsintensität werden die oben genannten Anpassungsfaktoren (siehe Tabelle 2) bestimmt. Darüberhinaus kann die Häufigkeit der einzelnen Belastungsabschnitte an das vorgesehene Einsatzprofil angepaßt werden.

Die Erfindung ermöglicht insbesondere folgendes:

(1) Eine Simulation realistischer, fahrphysikalischer Zustände in Form von standardisierten Basisbelastungsprogrammen, bestehend aus definierten Belastungsabschnitten mit zugehöriger Korrelation und Häufigkeit der angreifenden Kräfte.

(2) Anpassung eines standardisierten Basisbelastungsprogramms an unterschiedliche Fahrzeugtypen, Achslasten und Einsatzbedingungen, wobei einzelne Belastungsabschnitte entsprechend der unterschiedlichen Belastungsintensität und Häufigkeit nach einer Matrix gezielt angepaßt werden können. Diese Anpassung orientiert sich an physikalischen Eckwerten, die entweder aufgrund rechnerischer Abbildungen oder Kurzzeitmessungen mit Fahrzeugen ermittelt werden.

(3) Anpassung der zu untersuchenden Kraftfahrzeugbaugruppe, insbesondere von Einzelradaufhängungen von Kraftfahrzeugen, an ein standardisiertes Basisbelastungsprogramm derart, daß aufgrund dieses standardisierten Basisbelastungsprogramms ein aktuelles Ansteuerbelastungsprogramm in verhältnismäßig einfacher Weise für unterschiedlichste Kraftfahrzeugbaugruppen, insbesondere Einzelradaufhängungen, erstellt werden kann.

Es muß hier betont werden, daß - abgesehen von seltenen Ausnahmefällen - eine Verwendung und Anpassung eines standardisierten Basisbelastungsprogramms für die einander entsprechenden Baugruppen, insbesondere Einzelradaufhängungen, ohne versuchseinrichtungsspezifische Umrechnungsgrößen praktisch nicht möglich ist, wie die Untersuchungen gezeigt haben, welche im Rahmen der Erfindung durchgeführt wurden. Nach den Ergebnissen dieser Untersuchungen läßt sich eine besonders praktikable und relativ unkomplizierte Anpassung des Basisbelastungsprogramms durch die oben und in den Unteransprüchen angegebenen Modifizierungsmittel erreichen, insbesondere durch solche zur Linearisierung der Federkennlinie. Kurz zusammengefaßt wird mit der Erfindung ein Verfahren zur Prüfung von Kraftfahrzeugbaugruppen, insbesondere Einzelradaufhängungen von Kraftfahrzeugen, unter betriebsähnlichen Belastungsbedingungen zur Verfügung gestellt. Eine zur Durchführung dieses Verfahrens geeignete Versuchseinrichtung umfaßt eine Belastungseinrichtung zur Einleitung von Vertikalkräften, Seitenkräften, Längskräften sowie Brems- oder Antriebskräften in die Kraftfahrzeugbaugruppe, insbesondere in eine Einzelradaufhängung. Weiterhin umfaßt die Versuchseinrichtung eine Steuereinrichtung zum Steuern der Belastungseinrichtung derart, daß die Vertikalkräfte, Seitenkräfte, Längskräfte sowie Brems- oder Antriebskräfte gemäß einem vorbestimmten Ansteuerbelastungsprogramm, durch das die Vertikal-, Seiten-, Längs- und/oder Brems- bzw. Antriebskräfte zeitlich so kombiniert erzeugt werden, daß dadurch unterschiedliche, fahrphysikalisch realistische Belastungsfälle in zeitlichen Belastungsabschnitten simuliert werden, welche zu Belastungsblöcken zusammengefaßt in die Kraftfahrzeugbaugruppe, insbesondere die Einzelradaufhängung, wiederholt eingeleitet werden. Durch das Ansteuerbelastungsprogramm werden unterschiedliche Belastungsfälle der Kraftfahrzeugbaugruppe, insbesondere der Einzelradaufhängung, zeitlich aufeinanderfolgend simuliert. Das Ansteuerbelastungsprogramm besteht aus einem an die jeweils zu prüfende aktuelle Kraftfahrzeugbaugruppe, insbesondere die Einzelradaufhängung, durch fahrzeug- und/oder achsspezifische Umrechungsgrößen und durch versuchseinrichtungsspezifische Umrechnungsgrößen angepaßten standardisierten Basisbelastungsprogramm. Es sind Modifizierungsmittel zur Anpassung der Kraftfahrzeugbaugruppe, insbesondere der Einzelradaufhängung, an das standardisierte Basisbelastungsprogramm vorgesehen, welche ihrerseits eine relativ besonders unkomplizierte Anpassung des Basisbelastungsprogramms ermöglichen. Die Modifizierungsmittel sind vorzugsweise Mittel zur Linearisierung der Federkennlinie der Federung der Kraftfahrzeugbaugruppe, insbesondere zur Linearisierung der Vertikalfeder der Einzelradaufhängung.

**Patentansprüche**

1. Verfahren zur Prüfung von Kraftfahrzeugbaugruppen, insbesondere Einzelradaufhängungen von Kraftfahrzeugen, unter betriebsähnlichen Belastungsbedingungen, umfassend:

(a) Belasten der Kraftfahrzeugbaugruppe, insbesondere der Einzelradaufhängung (1), mit Vertikalkräften ($F_z$), Seitenkräften ($F_y$), Längskräften ($F_x$) und/oder Bremsoder Antriebskräften ($F_{xB}$), und

(b) Steuern der Vertikalkräfte ($F_z$), Seitenkräfte ($F_y$), Längskräfte ($F_x$) und/oder Brems- oder Antriebskräfte ($F_{xB}$) gemäß einem vorbestimmten Ansteuerbelastungsprogramm, durch das zu Belastungsblöcken zusammengefaßte unterschiedliche, fahrphysikalisch realistische Belastungsfälle der Kraftfahrzeugbaugruppe, insbesondere der Einzelradaufhängung (1), zeitlich aufeinanderfolgend wiederholt simuliert werden;

wobei das Ansteuerbelastungsprogramm dadurch aus einem standardisierten Basisbelastungsprogramm gebildet wird, daß das standardisierte Basisbelastungsprogramm durch fahrzeug- und/oder achsspezifische Umrechnungsgrößen ($a_{Ri}$) und durch versuchseinrichtungsspezifische Umrechnungsgrößen (P) an die jeweils zu prüfende aktuelle Kraftfahrzeugbaugruppe, insbesondere die Einzelradaufhängung (1), angepaßt wird, wobei zur Anpassung der zu prüfenden aktuellen Kraftfahrzeugbaugruppe, insbesondere der Einzelradaufhängung (1), an das standardisierte Basisbelastungsprogramm deren Federung, insbesondere die Vertikalfeder (10) der Einzelradaufhängung (1), modifiziert wird.

**2.** Verfahren nach Anspruch 1, wobei zur Anpassung der zu prüfenden aktuellen Kraftfahrzeugbaugruppe, insbesondere der Einzelradaufhängung (1), die Federkennlinie ihrer Federung, insbesondere der Vertikalfeder (10) der Einzelradaufhängung (1), linearisiert wird.

## Claims

**1.** A method of testing motor vehicle sub-assemblies, more particularly individual wheel suspensions of motor vehicles, under loads similar to those occurring under operating conditions, comprising

a) loading the vehicle sub-assembly, more particularly the individual wheel suspension (1), with vertical forces ($F_Z$), side forces ($F_Y$), longitudinal forces ($F_X$) and/or braking or driving forces ($F_{XB}$), and

b) controlling the vertical forces ($F_Z$), side forces ($F_Y$), longitudinal forces ($F_X$) and/or braking or driving forces ($F_{XB}$) in accordance with a predetermined load-control program whereby various loads on the vehicle sub-assembly, more particularly the individual wheel suspension (1), under realistic physical driving conditions are combined into blocks and simulated repeatedly and in succession,

wherein the load-control program is formed from a standardised basic loading program in that the standardised basic loading program is adapted to the actual vehicle sub-assembly under test, more particularly the individual wheel suspension (1), by means of conversion quantities ($a_{Ri}$) specific to the vehicle and/or axle and by conversion quantities (P) specific to the test set-up, the spring suspension, particularly the vertical spring (10) of the individual wheel suspension (1), being modified in order to adapt the actual vehicle sub-assembly under test, more particularly the individual wheel suspension (1), to the standardised basic loading program.

**2.** A method according to claim 1, wherein the spring characteristic of the suspension, more particularly of the vertical spring (10) of the individual wheel suspension (1), is linearised in order to adapt the actual vehicle sub-assembly under test, more particularly the individual wheel suspension (1).

## Revendications

**1.** Procédé d'essai de composants d'un véhicule automobile notamment des suspensions de roue indépendantes de véhicules automobiles dans des conditions de mise en charge analogues aux conditions réelles de circulation, comprenant les étapes suivantes :

(a) mise en charge du composant du véhicule notamment de la suspension de roue indépendante (1) avec des forces verticales ($F_z$), des forces latérales ($F_y$), les forces longitudinales ($F_x$) et/ou les forces de freinage et d'entraînement ($F_{xB}$), et

(b) commande des forces verticales ($F_z$), les forces latérales ($F_y$), les forces longitudinales ($F_x$) et/ou les forces de freinage et d'entraînement ($F_{xB}$) selon un programme de commande de mise en charge prédéterminé par les cas de mise en charge réels selon la physique de circulation, différents, regroupés en des blocs de mise en charge pour le composant du véhicule notamment la suspension de roue indépendante (1), et qui sont répétés simulées successivement dans le temps ;

le programme de commande de mise en charge étant formé à partir d'un programme de base de mise en charge, normalisé, en adaptant ce programme de base de mise en charge, normalisé par des grandeurs de conversion ($a_{ri}$), caractéristiques du véhicule et/ou de l'essieu et par des grandeurs de conversion (P) propres à l'installation d'essai, pour le composant à contrôler à ce moment, du véhicule automobile, notamment la suspension de roue indépendante (1), et l'adaptation du composant de véhicule à contrôler notamment de la suspension de roue indépendante (1) au programme de base de mise en charge, normalisé, est modifiée quant à la suspension notamment au ressort vertical (10) de la suspension de roue indépendante (1).

**2.** Procédé selon la revendication 1,
caractérisé en ce que
pour adapter le composant du véhicule automobile à contrôler notamment la suspension de roue indépendante (1), on linéarise la courbe de ressort de la suspension notamment du ressort vertical (10) de la suspension de roue indépendante (1).

FIG.1

$+F_y$
Seitenkraft
nach innen

$-F_y$
Seitenkraft nach außen

$+F_z$ Vertikalkraft

$+F_x$
Längskraft

$+F_{xB}$
Bremskraft

$F_{xA}$
Antriebskraft

$+F_z$ Vertikalkraft

FIG.2

FIG.3

Schlechtweg ≡ Geradeausfahrt

FIG.4

EP 0 554 779 B1

FIG.5